# EUROPEAN PATENT SPECIFICATION

(11) **EP 2 650 811 B1**
(45) Date of publication and mention of the grant of the patent: **22.11.2017**
(21) Application number: 12163629.4
(22) Date of filing: 10.04.2012
(51) Int. Cl.: G06F 12/14, G06F 21/34

(54) **Restricted access memory device providing short range communication-based security features and related methods**
Speichervorrichtung mit eingeschränktem Zugang mit kommunikationsbasierten Sicherheitsmerkmalen mit geringer Reichweite und zugehörige Verfahren
Dispositif de mémoire à accès restreint, propriétés de sécurité basées sur la communication à courte distance et procédés associés

(43) Date of publication of application: 16.10.2013
(73) Proprietor: BlackBerry Limited, Waterloo, ON N2K 0A7 (CA)
(72) Inventor: Deluca, Michael Joseph, Sunrise FL 33323 (US)
(74) Representative: Bryn-Jacobsen, Caelia

(56) References cited:
- WO-A1-2006/027723
- WO-A1-2010/052722
- US-A1- 2008 303 631
- US-A1- 2010 293 374
- US-A1- 2011 302 358

## Description

### Technical Field

This application relates generally to the field of communications, and more particularly, to electronic devices and related methods that use short range communication such as near field communication (NFC), for example.

### Background

External data storage devices, such as universal serial bus (USB) flash drives, provide a convenient and relatively inexpensive medium for saving and transporting electronic files between different host computing devices. However, the portability of such storage devices also makes them more susceptible to being misplaced or stolen, which may be particularly problematic where such devices are used for storing sensitive or confidential information.

To provide enhanced security, some USB flash drives provide data encryption so that information stored on the drive is encrypted. More particularly, the information is inaccessible without a corresponding application installed on a host computer that provides an interface for authentication when the flash drive is connected to the host computer. However, despite the existence of such drives, further security or convenience features may be desirable in some instances.

D1 relates to a portable storage device (MC) is disclosed, which comprises a memory (MEM) for storing data (DAT), a data interface (INT) for exchanging data (DAT) between the memory (MEM) and a host device (DEV), radio communication interface (RI) designed for receiving a key (K) from a transponder (T), checking means (COMP) for checking if a key (K) has a predefined value (V, and access inhibit means (SW) for controlling access to the memory (MEM), where in the access inhibit means (SW) are controlled by the checking means (COMP). Access to the memory (MEM) is only granted if a certain key (K) can be received, which means that a certain transponder (T) has to be in the vicinity of the portable storage device (MC) for granting access. Furthermore, data (DAT) which is transferred from host device (DEV) to memory (MEM) can be encrypted and data (DAT) which is transferred from memory (MEM) to host device (DEV) can be decrypted. In this way for example commonly used memory cards can be secured against unauthorized use.

D2 relates to a wireless secure authentication system for portable memory storage devices to prevent unauthorized transfer of stored data. The system includes a memory device such as a USB storage device that is capable of data storage. A wireless receiver and/or transmitter on the device receives and/or transmits an external signal from and/or to an external remote device, such as RFID card, bluetooth receiver, cellular telephone or any other wireless device. The device does not allow data to be accessed in the memory of the device until it receives an appropriate signal from the external device. Once the appropriate signal has been received, data transfer is allowed. In the event that the signal is lost, the data transfer is terminated and access to the data is not permitted. Examples of the system includes a USB memory device that requires a RFID card with an encrypted signal to be within a dedicated perimeter from the device.

D3 relates to embodiments of a mass storage device having a locking mechanism are described. The mass storage device includes a wireless reader to receive identification data from a wireless transponder, and to determine if the identification data matches a pre-stored data. The mass storage device includes a first controller device to enable access to at least a portion of a mass storage unit when the wireless reader determines that the identification data matches the pre-stored data. In one embodiment, a method of locking a mass storage device is described. The method includes receiving first identification data from a first wireless transponder at a mass storage device and unlocking the mass storage device upon determining that the first identification data matches a first pre-stored data.

D4 relates to a smart flash drive has one or more levels of smart storage switches and a lower level of single-chip flash devices (SCFD's). A SCFD contains flash memory and controllers that perform low-level bad-block mapping and wear-leveling and logical-to-physical block mapping. The SCFD report their capacity, arrangement, and maximum wear-level count (WLC) and bad block number (BBN) to the upstream smart storage switch, which stores this information in a structure register. The smart storage switch selects the SCFD with the maximum BBN as the target and the SCFD with the lowest maximum WLC as the source of a swap for wear leveling when a WLC exceeds a threshold that rises over time. A top-level smart storage switch receives consolidated capacity, arrangement, WLC, and BBN information from lower-level smart storage switch. Data is striped and optionally scrambled by Redundant Array of Individual Disks (RAID) controllers in all levels of smart storage switches.

D5 relates to a secure handheld portable storage device comprising a nonvolatile memory, data communication connectivity means, a secure processor operated with a secure operating system, and interfacing means for interfacing between the secure processor and a data processing system and the nonvolatile memory, wherein the secure processor comprises a cpu, a secure memory, and optionally PKI, and/or encryption/decryption means.

The present invention is set out in the independent claims, with some optional features set out in the claims dependent thereto.

### Brief Description of the Drawings

FIG. 1 is a schematic block diagram of an electronics system in accordance with one example aspect.
FIG. 2 a schematic block diagram of an example embodiment of the restricted access memory device from the system of FIG. 1.
FIG. 3 is a schematic diagram of the system of FIG. 1 illustrating encrypted data transfer resulting from upon NFC-based authorization.
FIG. 4 is a schematic diagram of the system of FIG. 1 illustrating encrypted data transfer based upon authorization from a host device.
FIG. 5 is a flow diagram illustrating method aspects associated with the system and devices of FIGS. 1-4
FIG. 6 is a schematic block diagram illustrating example components that may be used with the mobile communications devices of FIGS. 1 and 2.

### Detailed Description

The present description is made with reference to the accompanying drawings, in which example embodiments are shown. However, many different embodiments may be used, and thus the description should not be construed as limited to the embodiments set forth herein. Rather, these embodiments are provided so that this disclosure will be thorough and complete.

Generally speaking, a restricted access memory device is disclosed herein which may include a memory, a host interface connector, a short range communication transceiver (e.g., a near field communication (NFC) transceiver), and a processor coupled with the memory and the short range communication transceiver. The processor may be capable of storing data in the memory, and reading the data from the memory to the host device via the host interface connector based upon at least one of receiving first authentication data including a password, via the host interface connector, from a memory access application installed on the host device, or receiving second authentication data via the short range communication transceiver without use of the memory access application. As such, the memory device may advantageously provide access to the stored data without the use of NFC communication on host devices where the memory access application is previously installed, as well as on host devices where the memory access application is not installed but short range communication authentication is available.

More particularly, the processor may be capable of installing the memory access application on the host device based upon the short range communication transceiver. Furthermore, the processor may be a cryptographic processor that is further capable of encrypting the data stored in the memory. By way of example, the host interface connector may include a universal serial bus (USB) connector, and the memory may include a flash memory. Also by way of example, the second authentication data may include a password, challenge-response data, etc. The memory device may further include a thumb drive housing carrying the memory, the host interface connector, the short range communication transceiver, and the processor.

A related electronics system is also provided. The system may include a host device, a short range communication device, and a restricted access memory device, such as the one described briefly above. A related method is also provided for a memory device, such as the one described briefly above. The method may include storing data in the memory, and reading the data from the memory to the host device via the host interface connector based upon at least one of receiving first authentication data including a password, via the host interface connector, from the memory access application on the host device, or receiving second authentication data from the short range communication device via the short range communication transceiver without use of the memory access application.

A related computer-readable medium for a restricted access memory device, such as the one described briefly above, is also provided. The computer-readable medium may have computer executable instructions for causing the memory device to perform steps including storing data in the memory, and reading the data from the memory to the host device via the host interface connector based upon at least one of receiving first authentication data including a password, via the host interface connector, from the memory access application on the host device, or receiving second authentication data via the short range communication transceiver without use of the memory access application.

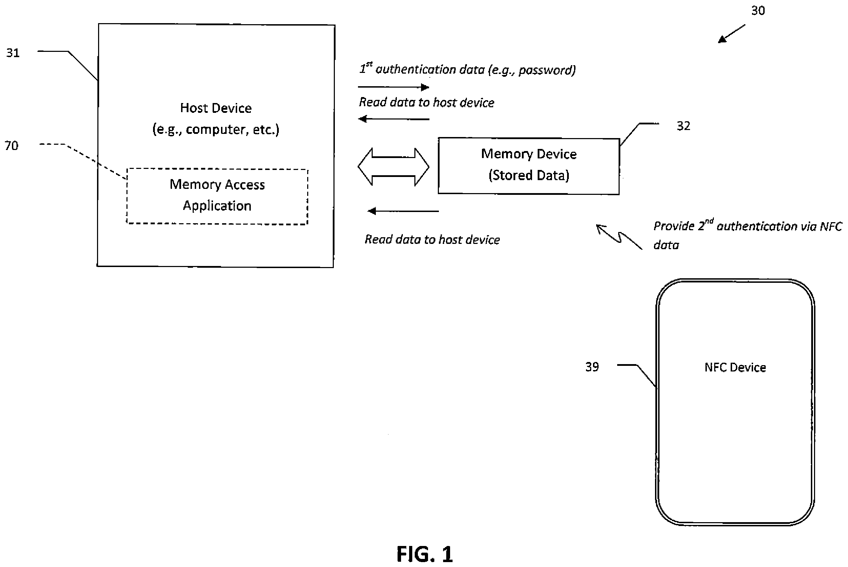

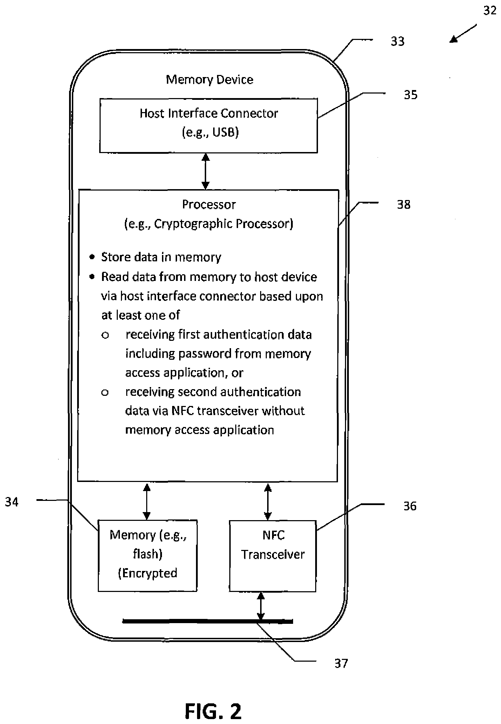

Referring initially to FIGS. 1 and 2, an electronics system **30** and related method aspects are first described. The system **30** illustratively includes a host device **31,** such as a desktop or laptop computer, tablet computer, or other device to which a restricted access memory device **32** may be connected. In the example shown in FIG. 2, the memory **32** illustratively includes a housing **33,** a memory or memory circuitry (e.g., flash, optical, etc.) **34,** a host interface connector **35,** a short range communication transceiver, such as a near field communication (NFC) transceiver **36,** and associated antenna **37,** and a processor **38** coupled with the memory **34,** the host interface connector **35,** and the NFC transceiver **36.** By way of example, the host interface connector **35** may be a universal serial bus (USB) connector (e.g., standard USB, micro USB, etc.), and the host device **31** may be capable of operating as a USB host. More particularly, the memory device **32** may be configured as a USB thumb drive, USB flash drive, or USB optical hard drive, for example. However, it should be noted that other communications formats may be used for communicating data between the memory device **32** and the host device **31,** such as an Ethernet connector, a wireless communications interface (e.g., Bluetooth, TransferJet, WiFi), etc. The short range communication transceiver may also use Bluetooth, TransferJet, or WiFi in some embodiments, for example.

By way of example, the processor **38** may be implemented using a combination of hardware (e.g., microprocessor, etc.) and a computer-readable medium having computer-executable instructions for performing the various operations described herein. The processor **38** may be capable of storing data in the memory **34,** which in some embodiments may include encrypted data. Moreover, in some embodiments the processor **38** may also be capable of cooperating with the host device **31** to install or configure a memory access application **70** on the host device **31** for accessing the stored data. More particularly, the memory access application **70** may be used to read the data from (and optionally write encrypted data to) the memory **34** via the host interface connector **35.** That is, the memory access application **70** may be installed on the host device **31** to allow the host device to provide first authentication information, such as a password, for authorizing the memory device **32** to provide the requested encrypted data to the host device **31.** By way of example, the password may be provided to the host device **31** via an input device such as a keyboard or keypad, mouse, touch screen, etc. The password may take various forms such as an alphanumeric sequence, a pattern or sequence selection, a spoken word or phrase or other audible input, etc., which verifies that a user is authorized to access the stored data. Other suitable forms of user input may also be used to provide passwords.

In accordance with one example embodiment, the memory device **33** may be an encrypted thumb drive which stores encrypted data in the memory **34** to provide enhanced data protection. The memory access application **70** may be stored on the memory device **32** (e.g., as an executable file, etc.) for installation on the host device **31,** or the host device **31** may access the memory access application installation file(s) from another source, such as over the Internet, for example. In some example embodiments, the processor **38** may be a cryptographic processor which performs encryption and decryption of the data that is stored in and retrieved from the memory **34** using suitable encryption techniques, although in other embodiments the encryption and decryption operations may be performed externally to the memory device **32.** It should be noted, however, that in some embodiments data encryption capabilities or encrypted data storage need not be used.

One potential drawback of encrypted thumb drives that require installed memory access applications on a host device **31** is that this makes use of the thumb drive on multiple different computers with differing operating systems cumbersome, and in some cases may not be possible. That is, if a user wishes to just briefly access a file from an encrypted thumb drive but is not near a computer with the memory access application **70** already installed, then the user will either have to wait for the installation process (which may not be practical or permissible), or wait until the user is at a computer, etc., where the application has previously been installed. Alternately the memory access application **70** may not be available for or even developed for the computer and/or corresponding operating system of the intended computer which will be used for file access.

In this regard, the system **30** may further include a NFC-enabled device, such as a mobile communications device, which may utilize NFC communication to authorize reading of the encrypted data from the memory **34** to the host device **31** via the host interface connector **35,** yet advantageously without use of the memory access application **70.** That is, the memory device **32** may advantageously be used to read encrypted data to (or write data from) the host device **31** without having to previously install the memory access application **70** on the host device **31.** Yet, the memory access application **70** may optionally be installed on certain host devices **31** so that the memory device **32** may also advantageously be accessed on such devices without a need for a separate NFC-enabled mobile communications device **39.** That is, the memory device **32** may advantageously be used similar to a traditional encrypted or otherwise access restricted thumb drive with host devices **31** where the memory access application **70** is already installed, and may still be used on other host devices where the memory access application **70** is not installed so long as the memory device is accessible by the host device and is authenticated via NFC communication using the separate NFC device **39.**

Example mobile wireless communications devices which may be enabled for NFC communication and used as the NFC device **39** may include portable or personal media players (e.g., MP3 players, video players, etc.), remote controls (e.g., television or stereo remotes, etc.), portable gaming devices, portable or mobile telephones, smartphones, tablet computers, etc. However, it should be noted that other NFC-enabled devices **39** besides mobile communications devices may also be used with the system **30,** such as NFC tokens or cards, etc., in some embodiments.

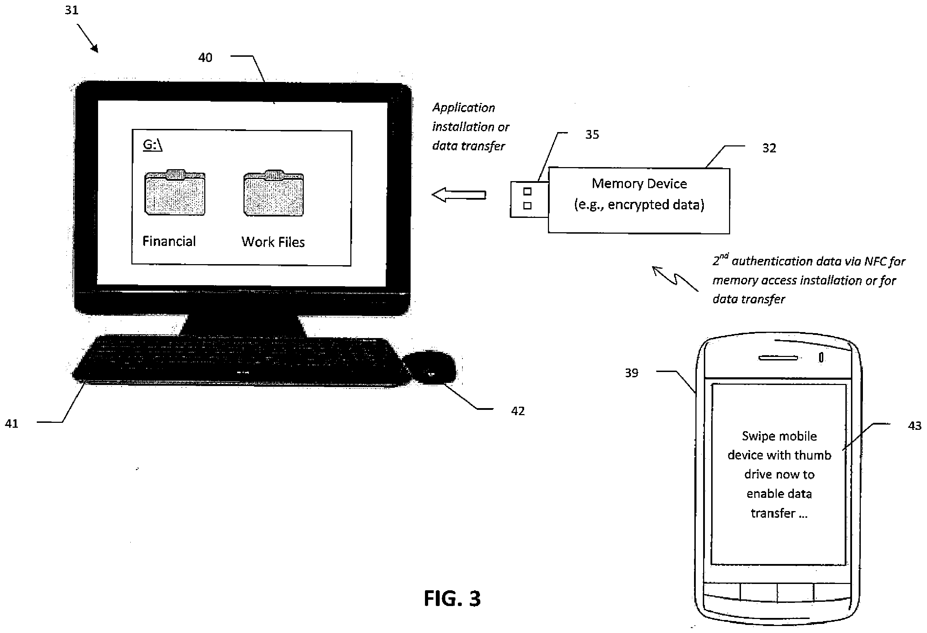

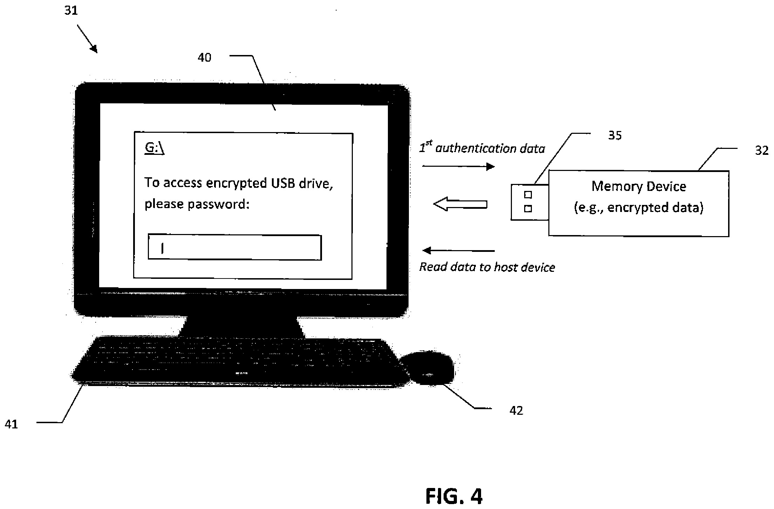

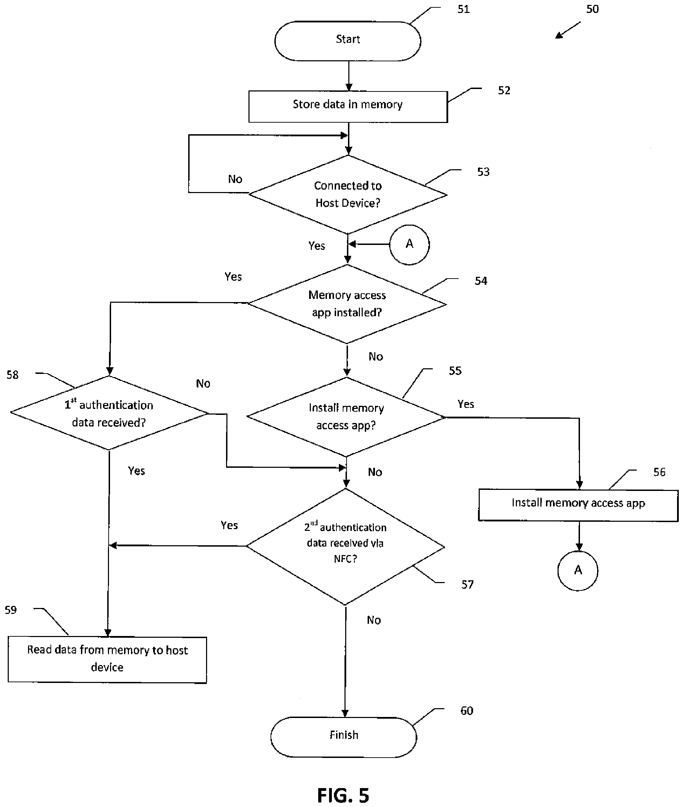

The foregoing will be further understood with reference to examples shown in FIGS. 3 and **4** and the flow diagram **50** of FIG. 5. In the illustrated example, beginning at Block **51,** encrypted data is stored on the memory device **32,** which in this case is a USB thumb drive, at Block **52.** In some instances, the encrypted data may have been stored on the memory device **32** at the time of manufacture, or it may have been stored during a prior connection with a host device **31,** for example. In the illustrated examples, the host device **31** is a personal computer having a display **40** and associated keyboard **41** and mouse **42.** When the memory device **32** is connected to the host device **31,** at Block **53,** the memory device may determine if the memory access application **70** has been previously installed on the host device **51,** at Block **54,** and if not the memory access application **70** may be installed if desired, at Blocks **55-56.** More particularly, assuming a compatible computer and operating system, the memory device **32** may load a driver to the host device, which causes the host device **31** to prompt a user if it is desired to run an installation application.

In accordance with another aspect, the NFC device **39** (which in the present example is a NFC-enabled smartphone) may be used to authorize installation of the memory access application **70** on the host device **31,** as well as authorize data transfer with the host device **31.** For example, if second authentication data is received from the mobile communications device **39** via NFC, then the user may be prompted (either on a display **43** of the mobile communications device or on the display **40** of the host device **31,** for example) as to whether installation of the memory access application **70** is desired, or whether data transfer without installation of the memory access application is being authorized, at Blocks **57** and **59.** Alternately NFC may enable restricted access to the device if the computer already is able to generally access the memory device with existing non-restricted applications, such as a generic USB memory interface application. In either case, access to the memory device **32** is provided based upon proper NFC authentication, which in the example of FIG. 3, the memory device **32** is recognized as a mass storage device and labeled as a detachable "G:\" drive, which includes encrypted data organized in "financial" and "work files" folders, although other folder or data storage hierarchies may be used in different embodiments. The second authentication data may be an identification (ID) number, key-based challenge-response data, a password as described above, etc., which is exchanged via NFC communication between the NFC device **39** and the NFC transceiver **36.**

As noted above, if the memory access application **70** is installed on the host device **31,** then the user has the option to perform data reading (or writing) based upon providing appropriate credentials (i.e., first authentication data) through the host device, such as a password (see FIG. 4), challenge-response data, etc., at Block **58.** The method of FIG. 5 illustratively concludes at Block **60.**

As a result of the above-described configuration, the memory device **32** may advantageously be able to transfer files between host devices **31** on different platforms or having different operating systems. For example, the memory access application **70** may not be available for all desired operating systems (e.g., Windows, iOS, Android, QNX, etc.). Yet, the above-described approach allows for encrypted or otherwise restricted access data to be read by a host device **31** that does not have the memory access application **70** installed based solely upon an authenticating NFC communication, so long as it has an appropriate generic interface driver and a compatible connector for the host interface connector **35.** The NFC transceiver **36** may be powered by a USB (or other) interface with the host device **31** when connected thereto. So, in one example use case, the memory device **32** may be plugged into a Windows platform, enabled or authorized for data transfer with a NFC "kiss" from the NFC device **39,** and then moved to an Android tablet and similarly authorized for transfer of the files.

The memory device **32** may be paired with a respective NFC device **39** in various ways. For example, when a user buys and registers the memory device **32,** a phone number, email address, device PIN, etc., associated with the mobile communications device may be provided, to a registration server, which in turn pushes a password or key down to the device over a communications network (e.g., Internet, cellular network, etc.). In another embodiment, the memory device **32** may be plugged into a host device **31,** such as a user's personal computer, and run through an initial programming sequence where it is paired with a respective mobile communications device **39.** In still another embodiment, a paired NFC token (e.g., a passive token) may be sold with the memory device **32** (e.g., as a key chain token, etc.), which is pre-configured to provide the second authentication data to the memory device **32.**

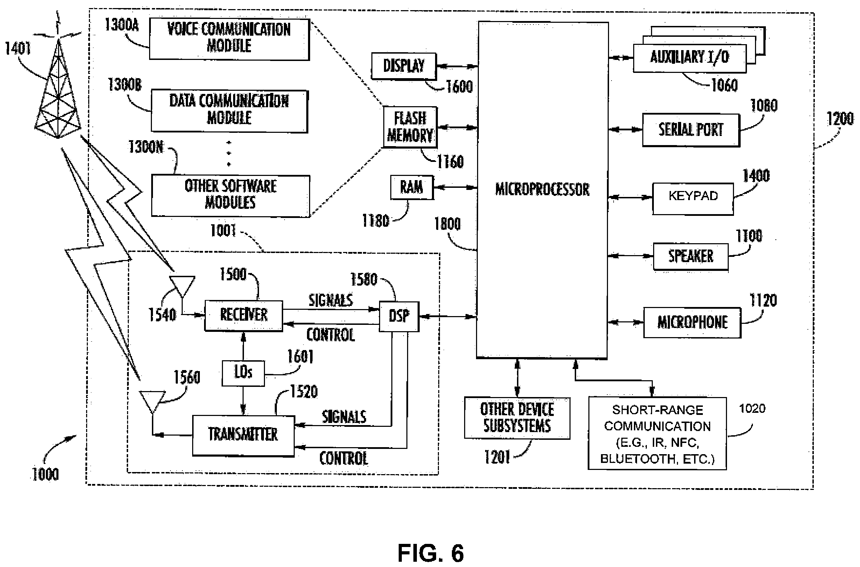

Example components of a mobile communications device **1000** that may be used in accordance with the above-described embodiments are further described below with reference to FIG. 6. The device **1000** illustratively includes a housing **1200,** an optional keyboard or keypad **1400** and an output device **1600.** The output device shown is a display **1600,** which may include a full graphic LCD. In some embodiments, the display **1600** may have an array of touch sensors associated therewith to define a touch screen that may be used an input device. Various types of display technologies may be used, including three-dimensional (3D) displays, in some embodiments. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may include a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, wireless local area network (WLAN) or WiFi, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) communications module for communicating with a NFC device or NFC tag via NFC communications. Other short-range modules may includes a radio frequency identification (RFID) module, a TransferJet module, etc.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A restricted access memory device (32) including:
a memory (34);
a host interface connector (35);
a short range communication transceiver (36); and
a processor (38) coupled with the memory and the short range communication transceiver and capable of
storing data in the memory, in which the restricted access memory device is arranged for:
reading the data from the memory to a host device (31) via the host interface connector based upon receiving first authentication data including a password, via the host interface connector, from a memory access application (70) installed on the host device, and
reading the data from the memory to the host device (31) via the host interface connector based upon receiving second authentication data via the short range communication transceiver without use of the memory access application;
wherein the processor is capable of installing the memory access application on the host device based upon the short range communication transceiver; and in which a short range communication device (39) is arranged to authorize installation of the memory access application (70) on the host device (31), as well as authorize data transfer with the host device (31) via near field communications.

2. The memory device of Claim 1 wherein the processor includes a cryptographic processor that is further capable of encrypting the data stored in the memory.

3. The memory device of Claim 1 wherein the host interface connector includes a universal serial bus, USB, connector.

4. The memory device of Claim 1 wherein the memory includes a flash memory.

5. The memory device of Claim 1 wherein the short range communication transceiver comprises a near field communication, NFC, transceiver.

6. The memory device of Claim 1 wherein the second authentication data includes a password.

7. The memory device of Claim 1 wherein the second authentication data includes challenge-response data.

8. The memory device of Claim 1 further including a thumb drive housing carrying the memory, the host interface connector, the short range communication transceiver, and the processor.

9. An electronics system (30) including:
a host device (31) having a memory access application (70) installed thereon;
a short range communication device (39); and
a restricted access memory device (32) including a memory (34),
a host interface connector (35),
a short range communication transceiver (36), and
a processor (38) coupled with the memory and the NFC transceiver and capable of
storing data in the memory, reading the data from the memory to the host device via the host interface connector based upon
receiving first authentication data including a password, via the host interface connector, from the memory access application on the host device, and
reading the data from the memory to the host device via the host interface connector based upon receiving second authentication data via the short range communication transceiver without use of the memory access application; in which the processor is capable of installing the memory access application on the host device based upon the short range communication transceiver; in which a short range communication device (39) is arranged to authorize installation of the memory access application (70) on the host device (31), as well as authorize data transfer with the host device (31) via near field communications.

10. The electronics system of Claim 9 wherein the processor includes a cryptographic processor that is further capable of encrypting the data stored in the memory.

11. A method for a restricted access memory device (32) including a memory (34), a host interface connector (35), and a short range communication transceiver (36), the method including:
storing data in the memory; and in which the restricted access memory device is arranged for:reading the data from the memory to a host device (31) via the host interface connector based upon receiving first authentication data including a password, via the host interface connector, from a memory access application (70) installed on the host device, and reading the data from the memory to the host device (31) via the host interface connector based upon receiving second authentication data via the short range communication transceiver without use of the memory access application; wherein installing includes installing the memory access application on the host device based upon the short range communication transceiver; and in which a short range communication device (39) is arranged to authorize installation of the memory access application (70) on the host device (31), as well as authorize data transfer with the host device (31) via near field communications.

12. The method of Claim 11 further including encrypting the data to be stored in the memory at the memory device.

## Patentansprüche

1. Eine Speichervorrichtung (32) mit beschränktem Zugriff, die umfasst:
einen Speicher (34);
einen Host-Schnittstelle-Verbinder (35);
ein Nahbereichs-Kommunikations-Transceiver (36); und
einen Prozessor (38), der mit dem Speicher und dem Nahbereichs-Kommunikations-Transceiver gekoppelt ist und betriebsfähig ist zum Speichern von Daten in dem Speicher, wobei die Speichervorrichtung mit beschränktem Zugriff ausgebildet ist zum:
Lesen der Daten aus dem Speicher an eine Hostvorrichtung (31) über den Host-Schnittstelle-Verbinder basierend auf einem Empfangen von ersten Authentifizierungsdaten, einschließlich eines Passworts, über den Host-Schnittstelle-Verbinder von einer Speicherzugriffsanwendung (70), die auf der Hostvorrichtung installiert ist, und
Lesen der Daten aus dem Speicher an die Hostvorrichtung (31) über den Host-Schnittstelle-Verbinder basierend auf einem Empfangen von zweiten Authentifizierungsdaten über den Nahbereichs-Kommunikations-Transceiver ohne Verwendung der Speicherzugriffsanwendung;
wobei der Prozessor betriebsfähig ist zum Installieren der Speicherzugriffsanwendung auf der Hostvorrichtung basierend auf dem Nahbereichs-Kommunikations-Transceiver; und wobei eine Nahbereichs-Kommunikationsvorrichtung (39) ausgebildet ist zum Autorisieren einer Installation der Speicherzugriffsanwendung (70) auf der Hostvorrichtung (31) sowie zum Autorisieren einer Datenübertragung mit der Hostvorrichtung (31) über Nahfeldkommunikationen.

2. Die Speichervorrichtung gemäß Anspruch 1, wobei der Prozessor einen kryptographischen Prozessor umfasst, der weiter betriebsfähig ist zum Verschlüsseln der in dem Speicher gespeicherten Daten.

3. Die Speichervorrichtung gemäß Anspruch 1, wobei der Host-Schnittstelle-Verbinder einen USB(universal serial bus)-Verbinder umfasst.

4. Die Speichervorrichtung gemäß Anspruch 1, wobei der Speicher einen Flash-Speicher umfasst.

5. Die Speichervorrichtung gemäß Anspruch 1, wobei der Nahbereichs-Kommunikations-Transceiver einen Nahfeldkommunikations(NFC - near field communication)-Transceiver umfasst.

6. Die Speichervorrichtung gemäß Anspruch 1, wobei die zweiten Authentifizierungsdaten ein Passwort umfassen.

7. Die Speichervorrichtung gemäß Anspruch 1, wobei die zweiten Authentifizierungsdaten Challenge-Response-Daten umfassen.

8. Die Speichervorrichtung gemäß Anspruch 1, die weiter ein Thumb-Drive-Gehäuse umfasst, das den Speicher, den Host-Schnittstelle-Verbinder, den Nahbereichs-Kommunikations-Transceiver und den Prozessor trägt.

9. Ein elektronisches System (30), das umfasst:
eine Hostvorrichtung (31) mit einer darauf installierten Speicherzugriffsanwendung (70);
eine Nahbereichs-Kommunikationsvorrichtung (39); und
eine Speichervorrichtung (32) mit beschränktem Zugriff, die umfasst einen Speicher (34),
einen Host-Schnittstelle-Verbinder (35),
einen Nahbereichs-Kommunikations-Transceiver (36), und
einen Prozessor (38), der mit dem Speicher und dem NFC-Transceiver gekoppelt ist und betriebsfähig ist zum
Speichern von Daten in dem Speicher, Lesen der Daten aus dem Speicher an die Hostvorrichtung über den Host-Schnittstelle-Verbinder basierend auf einem Empfangen von ersten Authentifizierungsdaten, einschließlich eines Passworts, über den Host-Schnittstelle-Verbinder von der Speicherzugriffsanwendung auf der Hostvorrichtung, und
Lesen der Daten aus dem Speicher an die Hostvorrichtung über den Host-Schnittstelle-Verbinder basierend auf einem Empfangen von zweiten Authentifizierungsdaten über den Nahbereichs-Kommunikations-Transceiver ohne Verwendung der Speicherzugriffsanwendung; wobei der Prozessor betriebsfähig ist zum Installieren der Speicherzugriffsanwendung auf der Hostvorrichtung basierend auf dem Nahbereichs-Kommunikations-Transceiver; wobei eine Nahbereichs-Kommunikationsvorrichtung (39) ausgebildet ist zum Autorisieren einer Installation der Speicherzugriffsanwendung (70) auf der Hostvorrichtung (31) sowie zum Autorisieren einer Datenübertragung mit der Hostvorrichtung (31) über Nahfeldkommunikationen.

10. Das elektronische System gemäß Anspruch 9, wobei der Prozessor einen kryptographischen Prozessor umfasst, der weiter betriebsfähig ist zum Verschlüsseln der in dem Speicher gespeicherten Daten.

11. Verfahren für eine Speichervorrichtung (32) mit beschränktem Zugriff, die einen Speicher (34), einen Host-Schnittstelle-Verbinder (35) und einen Nahbereichs-Kommunikations-Transceiver (36) umfasst, wobei das Verfahren umfasst:
Speichern von Daten in dem Speicher; und wobei die Speichervorrichtung mit beschränktem Zugriff ausgebildet ist zum: Lesen der Daten aus dem Speicher an eine Hostvorrichtung (31) über den Host-Schnittstelle-Verbinder basierend auf einem Empfangen von ersten Authentifizierungsdaten, einschließlich eines Passworts, über den Host-Schnittstelle-Verbinder von einer Speicherzugriffsanwendung (70), die auf der Hostvorrichtung installiert ist, und
Lesen der Daten aus dem Speicher an die Hostvorrichtung (31) über den Host-Schnittstelle-Verbinder basierend auf einem Empfangen von zweiten Authentifizierungsdaten über den Nahbereichs-Kommunikations-Transceiver ohne Verwendung der Speicherzugriffsanwendung;
wobei das Installieren umfasst ein Installieren der Speicherzugriffsanwendung auf der Hostvorrichtung basierend auf dem Nahbereichs-Kommunikations-Transceiver; und wobei eine Nahbereichs-Kommunikationsvorrichtung (39) ausgebildet ist zum Autorisieren einer Installation der Speicherzugriffsanwendung (70) auf der Hostvorrichtung (31) sowie zum Autorisieren einer Datenübertragung mit der Hostvorrichtung (31) über Nahfeldkommunikationen.

12. Das Verfahren gemäß Anspruch 11, das weiter ein Verschlüsseln der Daten umfasst, die in dem Speicher an der Speichervorrichtung zu speichern sind.

## Revendications

1. Dispositif de mémoire à accès restreint (32), comprenant :
une mémoire (34) ;
un connecteur d'interface avec l'hôte (35) ;
un émetteur-récepteur de communication à courte portée (36) ; et
un processeur (38) couplé à la mémoire et à l'émetteur-récepteur de communication à courte portée et capable de :
enregistrer des données dans la mémoire ;
le dispositif de mémoire à accès restreint étant conçu pour :
lire les données entre la mémoire et un dispositif hôte (31) via le connecteur d'interface avec l'hôte, après avoir reçu des premières données d'authentification comprenant un mot de passe, via le connecteur d'interface avec l'hôte, à partir d'une application d'accès à la mémoire (70) installée sur le dispositif hôte ; et
lire les données entre la mémoire et le dispositif hôte (31) via le connecteur d'interface avec l'hôte, après avoir reçu des secondes données d'authentification, via l'émetteur-récepteur à courte portée, sans utiliser l'application d'accès à la mémoire ;
dans lequel le processeur est capable d'installer l'application d'accès à la mémoire sur le dispositif hôte en utilisant l'émetteur-récepteur de communication à courte portée ; et dans lequel un dispositif de communication à courte portée (39) est conçu pour autoriser l'installation d'une application d'accès à la mémoire (70) sur le dispositif hôte (31) ainsi que pour autoriser le transfert de données avec le dispositif hôte (31) via une communication en champ proche.

2. Dispositif de mémoire selon la revendication 1, dans lequel le processeur inclut un processeur cryptographique qui est en outre capable de chiffrer les données enregistrées dans la mémoire.

3. Dispositif de mémoire selon la revendication 1, dans lequel le connecteur d'interface avec l'hôte comprend un connecteur de bus série universel, USB pour « *Universal Serial Bus ».*

4. Dispositif de mémoire selon la revendication 1, dans lequel la mémoire inclut une mémoire flash.

5. Dispositif de mémoire selon la revendication 1, dans lequel l'émetteur-récepteur de communication à courte portée consiste en un émetteur-récepteur de communication en champ proche.

6. Dispositif de mémoire selon la revendication 1, dans lequel les secondes données d'authentification incluent un mot de passe.

7. Dispositif de mémoire selon la revendication 1, dans lequel les secondes données d'authentification incluent des données de réponse à un défi.

8. Dispositif de mémoire selon la revendication 1, comprenant en outre un boîtier de clef de mémoire qui porte la mémoire, le connecteur d'interface avec l'hôte, l'émetteur-récepteur de communication à courte portée et le processeur.

9. Système électronique (30) comprenant :
un dispositif hôte (31) possédant une application d'accès à la mémoire (70) qui y est installée ;
un dispositif de communication à courte portée (39) ; et
un dispositif de mémoire à accès restreint (32) incluant :
une mémoire (34) ;
un connecteur d'interface avec l'hôte (35) ;
un émetteur-récepteur de communication à courte portée (36) ; et
un processeur (38) couplé à la mémoire et à l'émetteur-récepteur de communication en champ proche et capable de :
enregistrer des données dans la mémoire ;
lire les données entre la mémoire et le dispositif hôte via le connecteur d'interface avec l'hôte, après avoir reçu des premières données d'authentification comprenant un mot de passe, via le connecteur d'interface avec l'hôte, à partir de l'application d'accès à la mémoire sur le dispositif hôte ; et
lire les données entre la mémoire et le dispositif hôte via le connecteur d'interface avec l'hôte, après avoir reçu des secondes données d'authentification, via l'émetteur-récepteur de communication à courte portée, sans utiliser l'application d'accès à la mémoire ;
dans lequel le processeur est capable d'installer l'application d'accès à la mémoire sur le dispositif hôte en utilisant l'émetteur-récepteur de communication à courte portée ; et dans lequel un dispositif de communication à courte portée (39) est conçu pour autoriser l'installation d'une application d'accès à la mémoire (70) sur le dispositif hôte (31) ainsi que pour autoriser le transfert de données avec le dispositif hôte (31) via une communication en champ proche.

10. Système électronique selon la revendication 9, dans lequel le processeur inclut un processeur cryptographique qui est en outre capable de chiffrer les données enregistrées dans la mémoire.

11. Procédé destiné à un dispositif de mémoire à accès restreint (32) incluant une mémoire (34), un connecteur d'interface avec l'hôte (35) et un émetteur-récepteur de communication à courte portée (36), le procédé comprenant les étapes consistant à :
enregistrer des données dans la mémoire ; et
dans lequel le dispositif de mémoire à accès restreint est conçu pour :
lire les données entre la mémoire et un dispositif hôte (31) via le connecteur d'interface avec l'hôte, après avoir reçu des premières données d'authentification comprenant un mot de passe, via le connecteur d'interface avec l'hôte, à partir d'une application d'accès à la mémoire (70) installée sur le dispositif hôte ; et
lire les données entre la mémoire et le dispositif hôte (31) via le connecteur d'interface avec l'hôte, après avoir reçu des secondes données d'authentification, via l'émetteur-récepteur à courte portée, sans utiliser l'application d'accès à la mémoire ;
dans lequel l'étape d'installation comprend l'étape consistant à installer l'application d'accès à la mémoire sur le dispositif hôte en utilisant l'émetteur-récepteur de communication à courte portée ; et
dans lequel un dispositif de communication à courte portée (39) est conçu pour autoriser l'installation de l'application d'accès à la mémoire (70) sur le dispositif hôte (31) ainsi que pour autoriser le transfert de données avec le dispositif hôte (31) via une communication en champ proche.

12. Procédé selon la revendication 11, comprenant en outre l'étape consistant à chiffrer sur le dispositif de mémoire les données à enregistrer dans la mémoire.
